Europäisches Patentamt

European Patent Office

Office européen des brevets

(11) Veröffentlichungsnummer: **0 475 129 A1**

# EUROPÄISCHE PATENTANMELDUNG

(21) Anmeldenummer: **91113875.8**

(22) Anmeldetag: **19.08.91**

(51) Int. Cl.5: **C01C 3/16**, B01J 29/04

(30) Priorität: **21.08.90 DE 4026364**

(43) Veröffentlichungstag der Anmeldung:
**18.03.92 Patentblatt 92/12**

(84) Benannte Vertragsstaaten:
**AT BE DE FR GB IT NL SE**

(71) Anmelder: **SKW Trostberg Aktiengesellschaft
Dr.-Albert-Frank-Strasse 32 Postfach
1150/1160
W-8223 Trostberg(DE)**

(72) Erfinder: **Weitkamp, Jens, Prof.Dr.-Ing
Rotkehlchenweg 4
W-2900 Oldenburg(DE)**
Erfinder: **Ernst, Stefan, Dr.-Ing.
Reiherstrasse 23/1
W-7000 Stuttgart 80(DE)**
Erfinder: **Röck, Heinrich, Dr.
Traunsteiner Strasse 9
W-8223 Trostberg(DE)**
Erfinder: **Scheinost, Kurt, Dr.
Dr.-Albert-Frank-Strasse 43
W-8223 Trostberg(DE)**
Erfinder: **Hammer, Benedikt, Dr.
Franz-Joseph-Soll-Strasse 21
W-8223 Trostberg(DE)**
Erfinder: **Goll, Werner, Dr.
Frank-Caro-Strasse 51
W-8268 Garching 2(DE)**
Erfinder: **Michaud, Horst, Dr.
Sonnenleite 11
W-8223 Trostberg(DE)**

(74) Vertreter: **Huber, Bernhard, Dipl.-Chem. et al
Patentanwälte H. Weickmann, Dr. K. Fincke
F.A. Weickmann, B. Huber Dr. H. Liska, Dr. J.
Prechtel Kopernikusstrasse 9 Postfach 86 08
20
W-8000 München 86(DE)**

(54) **Verfahren zur Herstellung von Cyanamid.**

(57) Es wird ein Verfahren zur Herstellung von Cyanamid aus Harnstoff bzw. aus dessen Zersetzungsprodukten mit Hilfe eines mikroporösen Katalysators beschrieben, wobei man als Katalysator einen Zeolith und/oder ein Silicoalumophosphat einsetzt, der bzw. das mit Übergangsmetall-Kationen, ausgewählt aus der Gruppe I B und VII B des Periodensystems, dotiert wurde. Auf diese Weise gelingt es, den Umsatz, bezogen auf Harnstoff, auf 60 - 100 % zu steigern, wobei die Selektivitäten bezüglich Cyanamid bei etwa 30 - 50 % und bezüglich des unerwünschten Melamins bei ≤ 2 % liegen.

Die vorliegende Erfindung betrifft ein Verfahren zur Herstellung von Cyanamid aus Harnstoff oder aus Zersetzungsprodukten des Harnstoffs an mikroporösen Katalysatoren.

Cyanamid ist ein technisch wichtiges Ausgangsprodukt bei der Herstellung von Düngemitteln, Pflanzenschutzmitteln, Pharmazeutika und einer Anzahl weiterer wertvoller Produkte.

Aus EP 156 421 B1 ist bekannt, Cyanamid oder ein Cyanamid enthaltendes Gasgemisch durch Umsetzung von Harnstoff oder dessen Zersetzungsprodukten (Cyansäure/Isocyansäure) an Zeolith-Katalysatoren mit einem Porendurchmesser von maximal 0,8 nm herzustellen. Die Umsetzung erfolgt bei Temperaturen zwischen 200 bis 600°C und bei Verweilzeiten zwischen 0,1 s und einigen Minuten, bevorzugt zwischen 0,1 und 30 Sekunden. Als Partialdruck des Einsatzstoffes werden Werte zwischen 0,1 und 3 bar angegeben. Als Katalysatoren werden unterschiedliche stark saure Mordenit-Zeolithe eingesetzt. In der Veröffentlichung P.C. van Geem et al., i$^2$-Procestechnologie, Nr. 2 S.11/13, 1987 wird über Versuchsergebnisse mit den Zeolithen H-X, H-ZSM-5, H-Clinoptilolith und H-Erionit/Chabasit berichtet. Die besten Ergebnisse bezüglich der Selektivität für Cyanamid wurden mit solchen Katalysatoren erzielt, bei denen die aktiven Zentren an der äußeren Oberfläche der Zeolith-Kristallite durch selektiven Ionenaustausch nach EP 086 543 A1 vergiftet wurden. Bei solcherart modifizierten Zeolithen soll die Bildung des unerwünschten sperrigen Melamins an der äußeren Kristallit-Oberfläche zugunsten der Bildung von Cyanamid im formselektiv wirkenden Poreninneren deutlich zurückgedrängt sein.

Gemäß den Beispielen der EP 156 421 B1 werden bei Reaktionstemperaturen zwischen 390 und 420°C nur Umsätze von maximal 36,3 % erreicht. Als Produkte werden ausschließlich Cyanamid und Melamin genannt, wobei nicht klar wird, ob die angegebenen Prozentzahlen auf die Masse oder auf die Stoffmenge der Produkte bezogen sind. Hinweise auf weitere mögliche Nebenprodukte werden nicht gegeben.

Durch die niedrigen erzielten Umsätze wird ein erheblicher Trennaufwand Edukt/Produkt erforderlich. Dieser ist gekoppelt mit großen zurückzuführenden Stoffströmen von nicht umgesetztem Harnstoff und/oder nicht umgesetzter Isocyansäure/Cyansäure.

Der vorliegenden Erfindung liegt daher die Aufgabe zugrunde, ein Verfahren zur Herstellung von Cyanamid aus Harnstoff bzw. dessen Zersetzungsprodukten mit Hilfe eines mikroporösen Katalysators zu schaffen, welches die genannten Nachteile des Standes der Technik weitgehend oder völlig vermeidet und welches insbesondere hohe Umsätze mit guten Selektivitäten kombiniert und gleichzeitig die Selektivitäten für unerwünschte Nebenprodukte wie z.B. Melamin verringert.

Diese Aufgabe wird erfindungsgemäß dadurch gelöst, daß man als Katalysator einen Zeolith und/oder ein Silicoalumophosphat einsetzt, der bzw. das mit Übergangsmetall-Kationen, ausgewählt aus der Gruppe I B und VII B des Periodensystems, dotiert ist.

Es hat sich überraschenderweise gezeigt, daß mit den erfindungsgemäß verwendeten Katalysatoren wesentlich höhere Umsätze an Harnstoff bzw. Isocyansäure/Cyansäure erzielt werden können und gleichzeitig die Selektivitäten für Cyanamid im Vergleich zum Stand der Technik sehr hoch sind.

Außerdem werden beim Verfahren der Erfindung weitere wertvolle Nebenprodukte mit NCN-Struktur gebildet wie z.B. Dicyandiamid, Cyanharnstoff und Guanidincarbonat, was ebenfalls nicht vorhersehbar war. Schließlich sind auch die Selektivitäten hinsichtlich des unerwünschten Nebenproduktes Melamin mit weit unter 5 %, bezogen auf die Masse des umgesetzten Cyanamids, wesentlich niedriger als beispielsweise in der EP 156 421 B1 beschrieben.

Beim Verfahren der Erfindung wird die Zersetzung des Harnstoffs an speziellen Katalysatoren auf Basis von Zeolithen bzw. Silicoalumophosphaten vorgenommen, deren aktive Zentren ganz oder teilweise durch Kationen von Metallen der Gruppen I B oder/und VII B modifiziert wurden. Als Metalle kommen Cu, Ag, Au und Mn in Frage. Es können die Kationen eines einzigen oder von mehreren der genannten Metalle verwendet werden.

Aus der Gruppe der Zeolithe können im Prinzip alle eng-, mittel- und weitporigen Zeolithe für das erfindungsgemäße Verfahren eingesetzt werden, deren Porendurchmesser üblicherweise 0,3 bis 1,5 nm beträgt.

Besonders bevorzugt werden die Zeolithe ZSM-5, ZSM-58, EU-1, NaY, H-Y, BSS und Beta, deren aktive Zentren sich besonders gut durch Übergangsmetall-Kationen austauschen lassen.

Neben den Zeolithen können als Katalysatoren beim erfindungsgemäßen Verfahren auch Silicoalumophosphate eingesetzt werden, sofern sie eine ausreichende Ionenaustauschkapazität aufweisen. Bevorzugte Vertreter dieser Gruppe sind Sapro-5, Sapro-11, Sapro-31, Sapro-37, Sapro-41 und MCM-9.

Die Ionenaustauschkapazität der Zeolithe bzw. Silicoalumophosphate hängt vom Si/Al- bzw. Si/Al/P-Verhältnis ab. Je größer das Si/Al-Verhältnis bei den Zeolithen ist, desto kleiner ist die Ionenaustauschkapazität. Die erfindungsgemäß eingesetzten Zeolithe sollten demzufolge vorzugsweise ein Si/Al-Verhältnis von 1,5 bis 150, besonders bevorzugt von 2 bis 120 aufweisen. Bei den Silicoalumophosphaten liegt die bevorzugte Zusammensetzung, ausgedrückt als $Si_xAl_yP_z$ in den Bereichen $0,02 \leq x \leq 0,98$; $0,02 \leq y \leq 0,60$; $0,02 \leq z \leq 0,52$.

Es ist erfindungswesentlich, daß der Ionenaustausch der Zeolithe bzw. Silicoalumophosphate mit Übergangsmetall-Kationen, ausgewählt aus der Gruppe I B und VII B des Periodensystems, durchgeführt wird, dem nur die mit diesen Metallkationen dotierten Katalysatoren zeigen die angestrebte Aktivität bzw. Selektivität bei der Harnstoffzersetzung.

Besonders bevorzugt werden mit Kupfer-, Silber- und Mangan-Kationen dotierte Katalysatoren. Das Mengenverhältnis von Übergangsmetall-Kationen zu Zeolith bzw. Silicoalumophosphat kann in weiten Grenzen variiert werden, doch hat es sich als vorteilhaft erwiesen, wenn mindestens 10 % der vorhandenen Austauschkapazität des Katalysators mit Übergangsmetall-Kationen ausgetauscht werden. Noch vorteilhafter ist eine praktisch vollständige Ausschöpfung der Ionenaustauschkapazität, wobei es im Rahmen der Erfindung sogar möglich ist, den Katalysator über die Ionenaustauschkapazität hinaus mit Metallkationen zu imprägnieren.

Die Dotierung durch Ionenaustausch bzw. Imprägnierung der erfindungsgemäßen Katalysatoren kann nach bekannten und dem Fachmann geläufigen Verfahren problemlos vorgenommen werden.

Die Zersetzung des Harnstoffes erfolgt vorzugsweise bei Temperaturen von 300 bis 700°C, insbesondere von 450 bis 550°C.

Die Umsetzung wird vorzugsweise so durchgeführt, daß man den Harnstoff in einer Wirbelschicht verdampft, wobei sich dieser weitgehend zu Isocyansäure und Cyansäure zersetzt. Das diese Zersetzungsprodukte enthaltende Gemisch wird mit Hilfe eines Wirbel- bzw. Schleppgases (z.B. Ammoniak) einem Festbettreaktor mit dem erfindungsgemäß verwendeten Katalysator zugeführt. Nach einer Verweilzeit von etwa 0,1 bis 10 Sekunden wird das Reaktionsgemisch abgekühlt und gegebenenfalls aufgearbeitet.

Mit Hilfe des erfindungsgemäßen Verfahrens ist es möglich, den Umsatz, bezogen auf Harnstoff, auf 60 - 100 % zu steigern, wobei die Selektivitäten bezüglich Cyanamid bei ca. 30 - 50 % und bezüglich des unerwünschten Melamins bei $\leq$ 2 % liegen.

Die nachfolgenden Beispiele sollen die Erfindung näher erläutern.

Beschreibung der Versuchsapparatur

Die Versuche werden bei Atmosphärendruck in einer Strömungsapparatur durchgeführt. Als Einsatzstoff wird Harnstoff verwendet. Dieser wird über eine Dosierschnecke in eine auf Temperaturen zwischen 400 und 550°C thermostatisierte Wirbelschicht aus Sand eingebracht, wo der Harnstoff verdampft und sich dabei zu einer Mischung aus Isocyansäure und Cyansäure zersetzt. Als Wirbelgas und Schleppgas dient Ammoniak. Das derart hergestellte Gasgemisch wird über beheizte Leitungen dem Festbettreaktor mit dem Katalysator zugeführt. Die Reaktionsprodukte werden in einer Kühlfalle direkt hinter dem Reaktor bei -20°C auskondensiert und nach der Aufarbeitung analysiert. Mittels quantitativer Dünnschichtchromatographie werden folgende Produkte analytisch erfaßt: Harnstoff, Cyanamid, Dicyandiamid, Cyanharnstoff, Guanidincarbonat und Melamin.

Durchführung der Versuche

Die Katalysatoren werden ohne Binder gepreßt, gemahlen und gesiebt. Die Kornfraktion von 0,2 bis 0,3 mm wird für die katalytischen Experimente eingesetzt. Typischerweise beträgt das Schüttvolumen des Katalysators ca. 3 cm³; vor der Reaktion wurden die Katalysatoren in-situ im Stickstoffstrom ($\dot{V}_{N2}$ = 6 l/h) bei 550°C 12 h lang getrocknet.

**Beispiele**

Die nachfolgend aufgeführten Beispiele sollen typische Katalysatoren und typische Produktselektivitäten beschreiben. In keinem Fall sollen mit den Beispielen die Patentansprüche in irgendeiner Weise eingeschränkt werden.

**Beispiel 1**

Umsetzung von Harnstoff an MnZSM-5

Zeolith HZSM-5 (Si/Al-Verhältnis ca. 112) wurde zweimal für jeweils drei Stunden bei 80°C mit einem großen Überschuß (20 g Zeolith in 250 cm³ Lösung) einer 0,05 molaren wäßrigen Lösung von Mangan-(II)-acetat behandelt.

Die katalytischen Tests erfolgten unter Standardbedingungen, d.h.:

- Verweilzeit $\tau \sim$ 2 s
- Harnstoff-Durchsatz ca. 5 g/Stunde
- $V_{NH3}/m_{Ha} \sim$ 20 l/g
- Versuchsdauer: 2,5 Stunden
- Variation der Reaktionstemperatur von 450 bis 550°C in Schritten von 50°C Die Versuchsergebnisse sind in Tabelle 1 zusammengefaßt.

## Tabelle 1: Harnstoff-Umsetzung an MnZSM-5

| $T$,°C | $X_{Ha}$, % | $S_{Cy}$, % | $S_{DCD}$, % | $S_{CH}$, % | $S_{GC}$, % | $S_{Mel}$, % |
|---|---|---|---|---|---|---|
| 450 | 100 | 38,3 | 7,5 | 4,1 | Spuren | 1,2 |
| 500 | 92,9 | 40,2 | 2,6 | 2,9 | " | Spuren |
| 550 | 100 | 40,3 | 0,9 | 6,3 | " | " |

Abkürzungen:

T: Temperatur; $\tau$: Verweilzeit; X: Umsatz; S: Selektivität; Ha: Harnstoff; Cy: Cyanamid; DCD: Dicyandiamid; CH: Cyanharnstoff; GC: Guanidincarbonat; Mel: Melamin;

Wie man sieht, liegen die Harnstoff-Umsätze bei 90 bis 100 %. Die Cyanamid-Selektivitäten betragen 38 bis 40 %, während Guanidincarbonat und Melamin nur in Spuren entstehen.

**Beispiel 2**

Umsetzung von Harnstoff an CuZSM-5

Zeolith HZSM-5 entsprechend Beispiel 1 wurde einem dreimaligenen Ionenaustausch mit einem Überschuß einer 0,1 n Kupfersulfatlösung bei Raumtemperatur unterworfen. Der fertige Katalysator war bläulich gefärbt (hydratisierte $Cu^{2+}$-Ionen).

Die katalytischen Tests erfolgten unter den Standardbedingungen entsprechend Beispiel 1.

Die Versuchsergebnisse sind in Tabelle 2 zusammengefaßt.

Tabelle 2

| Harnstoffumsetzung an CuZSM-5 | | | | | |
|---|---|---|---|---|---|
| $T$,°C | $X_{Ha}$, % | $S_{Cy}$, % | $S_{DCD}$, % | $S_{CH}$, % | $S_{GC}$, % |
| 450 | 87,2 | 29,7 | 18,7 | 17,3 | 1,2 |
| 500 | 89,4 | 37,6 | 26,2 | 10,3 | 2,9 |
| 550 | 92,5 | 44,9 | 15,5 | 13,4 | 0,9 |

Die Harnstoff-Umsätze liegen hier bei 87 bis 93 %, die Cyanamid-Selektivitäten zwischen ca. 30 bis 45 %.

Die Selektivitäten aller NCN-Verbindungen (Cyanamid, Dicyandiamid, Cyanharnstoff und Guanidincarbonat) betragen 58 bis 69 %.

**Beispiel 3**

Umsetzung von Harnstoff an AgNaY

Zeolith AgNaY wurde durch dreimaligen Ionenaustausch von jeweils 25 g NaY (Si/Al-Verhältnis ca. 2,4) in 500 ml einer 0,5 n Lösung von Silbernitrat bei Raumtemperatur hergestellt.

Die katalytischen Tests erfolgten unter den Standardbedingungen entsprechend Beispiel 1.

Die Versuchsergebnisse sind in Tabelle 3 zusammengefaßt.

Tabelle 3

| Harnstoff-Umsetzung an AgNaY | | | | | |
|---|---|---|---|---|---|
| $T, °C$ | $X_{Ha}, \%$ | $S_{Cy}, \%$ | $S_{DCD}, \%$ | $S_{CH}, \%$ | $S_{GC}, \%$ |
| 450 | 71,8 | 38,7 | 32,2 | 18,6 | 0,7 |
| 500 | 68,6 | 31,6 | 18,8 | 20,5 | 1,3 |
| 550 | 61,0 | 48,1 | 22,6 | 20,2 | 1,3 |

Es wurden hierbei Harnstoff-Umsätze zwischen 60 und 70 % sowie Cyanamid-Selektivitäten von 31 bis 48 % erzielt.

## Patentansprüche

1. Verfahren zur Herstellung von Cyanamid aus Harnstoff oder/und dessen Zersetzungsprodukten bei erhöhter Temperatur und Verwendung eines mikroporösen Katalysators,
   **dadurch gekennzeichnet,**
   daß man als Katalysator einen Zeolith und/oder ein Silicoalumophosphat einsetzt, der bzw. das mit Übergangsmetall-Kationen, ausgewählt aus der Gruppe I B und VII B des Periodensystems, dotiert ist.

2. Verfahren nach Anspruch 1,
   **dadurch gekennzeichnet,**
   daß der Katalysator auf Basis von Zeolithen bzw. Silicoalumophosphaten mit einem oder mehreren Kation(en) der Metalle Kupfer, Silber und Mangan, dotiert ist.

3. Verfahren nach den Ansprüchen 1 und ,2
   **dadurch gekennzeichnet,**
   daß der verwendete Zeolith ein Si/Al-Verhältnis von 1,5 bis 150, vorzugsweise 2 bis 120, aufweist.

4. Verfahren nach den Ansprüchen 1 und 2,
   **dadurch gekennzeichnet,**
   daß ein Silicoalumophosphat der Zusammensetzung $Si_xAl_yP_z$ in den Grenzen $0,02 \leq x \leq 0,98$; $0,02 \leq y \leq 0,60$; $0,02 \leq z \leq 0,52$ verwendet wird.

5. Verfahren nach den Ansprüchen 1 bis 4,
   **dadurch gekennzeichnet,**
   daß mindestens 10 % der vorhandenen Austauschkapazität des Katalysators mit den genannten Übergangsmetall-Kationen belegt sind.

6. Verfahren nach den Ansprüchen 1 bis 5,
   **dadurch gekennzeichnet,**
   daß ein Katalysator verwendet wird, dessen gesamte Kationenbindungsstellen mit den genannten Kationen besetzt sind und der zusätzlich mit diesen Kationen imprägniert ist.

7. Verfahren nach den Ansprüchen 1 bis 6,
   **dadurch gekennzeichnet,**
   daß man einen Katalysator mit einer Porenweite von 0,3 bis 1,5 nm einsetzt.

8. Verfahren nach den Ansprüchen 1 bis 7,
   **dadurch gekennzeichnet,**
   daß man die Zersetzung des Harnstoffes bei 300 bis 700 °C, vorzugsweise 450 bis 550 °C, vornimmt.

9.  Verfahren nach den Ansprüchen 1 bis 8,
    **dadurch gekennzeichnet,**
    daß die Kontaktzeit des Reaktionsgemisches am Katalysator 0,1 bis 10 Sekunden beträgt.

10. Verfahren nach einem der vorhergehenden Ansprüche,
    **dadurch gekennzeichnet,**
    daß der Harnstoff oder/und dessen thermische Zersetzungsprodukte gasförmig mit dem festen Katalysator kontaktiert und anschließend das Produktgemisch unter Kühlung abgeschieden wird.

| | Europäisches Patentamt | EUROPÄISCHER RECHERCHENBERICHT | Nummer der Anmeldung |
|---|---|---|---|

**EP 91 11 3875**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| D,A | EP-A-0 156 421   (STAMICARBON)<br>— — — | | C 01 C 3/16<br>B 01 J 29/04 |
| A | EP-A-0 037 168   (MOBIL OIL)<br>* das ganze Dokument * *<br>— — — | 1-3 | |
| A | EP-A-0 036 249   (MOBIL OIL)<br>* das ganze Dokument * *<br>— — — | 1-3 | |
| A | EP-A-0 185 525   (MOBIL OIL)<br>* das ganze Dokument * *<br>— — — | 1,2,4 | |
| D,A | i2-Procestechnologie, nr. 2, seite 11-13; P.C. van Geem et al.: "Synthese van cyaanamide uit ureum."<br>— — — — — | | |
| | | | **RECHERCHIERTE SACHGEBIETE (Int. Cl.5)**<br><br>C 01 C<br>B 01 J |

Der vorliegende Recherchenbericht wurde für alle Patentansprüche erstellt

| Recherchenort | Abschlußdatum der Recherche | Prüfer |
|---|---|---|
| Den Haag | 04 Dezember 91 | ZALM W.E. |